# EUROPEAN PATENT SPECIFICATION

(11) **EP 2 900 432 B1**
(45) Date of publication and mention of the grant of the patent: **24.02.2021**
(21) Application number: 12775133.7
(22) Date of filing: 25.09.2012
(51) Int. Cl.: B25J 9/16

(54) **METHOD FOR SUPERVISING A ROBOT**
VERFAHREN ZUR ÜBERWACHUNG EINES ROBOTERS
PROCÉDÉ DE SURVEILLANCE D'UN ROBOT

(43) Date of publication of application: 05.08.2015
(73) Proprietor: ABB Schweiz AG, 5400 Baden (CH)
(72) Inventor: DEDECKE, Thomas, 63179 Obertshausen (DE)
(74) Representative: Maiwald Patent- und Rechtsanwaltsgesellschaft mbH
(86) International application number: PCT/EP2012/003998
(87) International publication number: WO 2014/048443

(56) References cited:
- DE-A1- 10 324 517
- US-A1- 2008 243 387
- QUINLAN S ET AL: "Elastic bands: connecting path planning and control", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, vol. CONF. 10, 2 May 1993 (1993-05-02), pages 802-807, XP010095009, DOI: 10.1109/ROBOT.1993.291936 ISBN: 978-0-8186-3450-5
- SUH S-H ET AL: "THE TUBE CONCEPT AND ITS APPLICATION TO THE OBSTACLE-AVOIDING MINIMUM-TIME TRAJECTORY PLANNING PROBLEM", PROCEEDINGS OF THE INTERNATIONAL CONFERENCE ON SYSTEMS, MAN, AND CYBERNETICS. ALEXANDRIA, VA., OCT. 20 - 23, 1987; [PROCEEDINGS OF THE INTERNATIONAL CONFERENCE ON SYSTEMS, MAN, AND CYBERNETICS], NEW YORK, IEEE, US, vol. VOL. 1 OF 3, no. 1987, 20 October 1987 (1987-10-20), pages 14-20, XP000042545,

## Description

The invention relates to a method for supervising a robot according to the pre-amble of claim 1.

It is known, that robots typically comprise a robot arm with several degrees of freedom in movement, for example 5, 6 or 7. Normally, each degree of freedom in movement of is realized by two robot arm segments, which are connected together by a rotary joint, wherein a dedicated drive is foreseen for each joint. At the tip of the robot arm normally a tool such as a gripper or a welding tool is foreseen. Thus it is possible to move the tool to each point within the working range of the robot in different orientations. Robots might have a working range of 3m around their rotational base for example.

Robots are controlled by so-called robot controllers which comprise a computing device and which are suitable to store and execute robot programs. Typically a robot controller also comprises amplifiers for supplying the drives of the robot. A robot program contains data of a desired movement path of the tip of the robot arm respectively a tool mounted thereon and for example also data concerning the desired movement speed. Furthermore data concerning the tool might be contained within the robot program, for example when and where a gripper tool has to be opened or closed. A tool center point is defined to have a clear reference point on the tip of the robot arm. A tool center point can also be a virtual point in a fixed distance to the tip of the robot arm. The robot controller executes a movement program in that way, that the tool center point is running along the programmed movement path in a desired orientation.

A robot in operation has a high risk of injuring persons within its working range. Thus the working range is normally a secured area wherein a person entering this area will cause an immediate shut down of the robot.

In some cases a cooperation of a robot with a person is required, for example a robot is handing over a workpiece to a person. Here special security mechanisms are required to ensure that no risk for the person cooperating with the robot will rise. One of those mechanisms consists in a so-called safety zone. This is a three-dimensional zone within the working range of the robot, where it is forbidden for the robot respectively the tool center point to enter. In case of a violation of such a zone by the robot, an immediate stop of the robot will be initiated.

Disadvantageously within the state of the art is, that in case of a violation of the safety zone a rather long follow-on time and a follow-on distance might be required, until the robot comes to complete stop, for example a length of 0,5m or even more. The follow-on distance mainly depends on the kinetic energy of the moving robot arm. This follow-on or retard distance for stopping the robot movement might be directed directly into the safety zone, so this zone has to be enlarged by a buffer zone to be sure that there is no risk of violating the safety zone. Thus the operational workspace of the robot which can be used for normal robot movements is reduced by the buffer zone in a disadvantageous way because the buffer zone, even it is located around the safety zone, can't be used for a programmed movement path.

In Quinlan S et al: "Elastic bands: Connecting Path Planning and Control", Proceedings of the international conference on robotics and automation Atlanta, May 2 - 6, 1993; vol. 10, 2 May 1993, pages 802 - 807, XP010005009, DOI: 10.1109/ROBOT.1993.291936, ISBN: 978-0-8186-3450-5, there is disclosed a framework for closing the gap between path planning of a robot movement path and control, implementing local sensor based motions by deforming in real time the path of a robot arm computed by a planner. Hereby the behavior of the robot is not completely determined at the planning level. When changes in the environment of the robot are detected, the path is deformed, avoiding the expense of recalling the path planner, the robot reacting in real time to information obtained by sensors, maintaining a complete collision-free path to the goal.

Based on this state of the art it is the objective of the invention to provide a method for increasing the workspace of the robot which is available for normal robot movements without a risk of violating a safety zone within the working range of the robot.

This problem is solved by a method for supervising a robot with the features of claim 1.

So according to the invention, the further following steps are comprised:
- defining a tolerance zone with limits along and around the movement path whereby the tolerance zone is outside the said safety zone, and whereby the tolerance zone is extending in a hose-like manner along the movement path, , and whereby the tolerance zone is widened and/or narrowed at least in sections along the movement path compared to the average width of the tolerance zone, and wherein the width of tolerance zone is anti-proportional to a desired movement speed within certain limits,
- continuously verifying whether the actual TCP position is within the tolerance zone,
- stopping of the robot movement in the case that the movement of the TCP of the robot exceeds the limits of the tolerance zone.

The basic idea of the invention consists in defining a tolerance zone along the movement path which has not to be left instead a safety zone which has not to be entered by the robot. A safety zone is a safe area within the working range of the robot, where a person can be sure not to be hit by a robot under any circumstances. Compared to the whole working range of the robot a safety zone along the movement path typically is rather small, for example a corridor or such.

In case of a fast movement a deviation has to be detected earlier as in case of a slow movement. Thus, the width of the tolerance zone is defined to be anti-proportional to the desired movement speed within certain limits.

According to prior art significant deviations of the robot from its given movement path might happen before the robot respectively its TCP are entering the safety zone respectively the buffer zone around and the robot stops. Thus the robot might have accelerated for a longer distance along a "wrong" path before entering the buffer zone so that the braking distance might be prolonged. To be in any case on the safe side that the robot is not entering the safety zone the buffer zone has to be enlarged in a disadvantageous way.

By defining a hose-like tolerance zone along and around the movement path - as proposed in this invention - deviations therefrom will be detected in their earliest stage. Thus the robot will stop immediately after detecting an abnormal deviation and will stop moving even the TCP is still within the working range. Of course the tolerance zone around the movement path has to be completely outside the desired safety zone and also a rather small buffer zone might be required around the desired safety area. But anyhow due to the detection of a possible deviation in an early stage those deviations are as small that the follow-on distance is reduced in an advantageous way. The safety for the person in the near of the robot is increased in an advantageous way. Hence the breaking distance will be as small as possible and a buffer zone around a desired safety area can by rather small.

The continuously verifying whether the actual TCP position is within the tolerance zone is typically done by a program product running on the robot controller. This is useful since the theoretical reference values of when and where the TCP of the robot should be are available within the robot controller anyhow. Thus also the information of the tolerance zone has also become provided to the robot controller. In case of leaving the tolerance zone the robot controller initiates an immediate stop of the robot.

The definition of the tolerance zone can be realized for example as additional parameter(s) to the data of the movement program to be executed or as additional overall control parameter of the robot. A possibility to feed those data into the robot controller consists for example by using a so-called teach pendant. This is a user interface for the communication inbetween robot controller and operator.

In a preferred form of the invention the tolerance zone is extending at least in sections approximately circular around the movement path. A circular and tube-like tolerance zone is on one side easy to program since only the parameter radius has to be provided, on the other side also the determination whether the TCP has left the tolerance zone is easy to realize respectively to program.

In a further embodiment of the invention the continuous determining of the actual position of the TCP is being done based on the actual measured axial values of the robot. As mentioned before, a robot arm comprises a chain of robot arm segments, which are connected together by rotary joints, wherein a dedicated drive is foreseen for each joint. Thus each joint has an axial value describing the actual pivoting angle inbetween the belonging segments. Normally measuring means are foreseen to determine those pivoting angles. Based on the geometry of the robot arm segments and the belonging pivoting angles it is possible to determine the real actual position by use of geometrical algorithms. The continuous determining of the actual position of the TCP is preferably done by a program product running on the robot controller. But it is in principle also possible to run such a program product on another device with calculation ability such as a personal computer.

In another variant of the invention the continuous determining of the actual position of the TCP is being done based on distance measurement between the moveable TCP or a point with fixed relation thereto and a fixed point within a working space around the robot. Such a distance measurement could be done be optical sensors which are focused on a marked point on the tip of the robot arm for example but also by special hardware similar to a GPS system. In this case special computation hardware might be required for the determining of the actual position, wherein the determined positions are provided to the robot controller in real time. Real time means a minimal time delay such as some few milliseconds at maximum.

In a further embodiment of the invention a safety zone with a surrounding buffer zone is foreseen, whereas a stopping of the robot movement is initiated in that case that the actual TCP is inside the buffer zone. This corresponds to a combination of prior art with the invention, whereas the disadvantages of the prior art, namely that a deviation from the given movement path might be detected rather late so that a longer follow-on distance for stopping is required, is avoided by stopping the robot when leaving the tolerance zone.

According to a further embodiment of the invention the following additional steps are foreseen:
- continuously determining the real orientation of the TCP,
- continuously determining the desired orientation of the TCP,
- stopping of the robot movement in the case that the difference between real and desired orientation of TCP exceeds a given limit at the same time.

The determination of the orientation might also be done by using the axial values of the robot or an external positioning system such as GPS or a vision based system. It has to be observed, that the comparison of desired and real orientation is done in each case for the same reference time. A given limit for the orientation is for example a deviation of at least 20° for at least two of the three orientation angles. Of course different limits are thinkable, for example a deviation of at least 30° for one of the three orientation angles or a deviation of at least 10° for all angles.

According to a further variant of the invention the following additional steps are foreseen:
- continuously determining the real movement speed of the TCP,
- continuously determining the theoretical desired movement speed of the TCP,
- stopping of the robot movement in the case that the difference between real and desired movement speed of TCP exceeds a given limit at the same time.

Also this variant of the method enables an early detection of a fault during execution of a robot program. It has to be observed that a robot even theoretically does not reach its desired movement speed during acceleration or deceleration phase. Thus a comparison of theoretical and real movement speed should only be done if no acceleration or deceleration is ongoing. A suitable limit for the difference of theoretical and real movement speed might be in the range of at least 10% or 20% or an absolute value of for example 100mm/s. Such precise surveillance of a robot movement might for example be required for medical purposes, when a robot is used for guiding a medical tool or such.

Further advantageous embodiments of the invention are mentioned in the dependent claims.

The invention will now be further explained by means of an exemplary embodiment and with reference to the accompanying drawings, in which:
- Figure 1: shows an exemplary system with robot and robot controller,
- Figure 2: shows a second given movement path with tolerance zone and
- Figure 3: exemplary second robot in working environment.

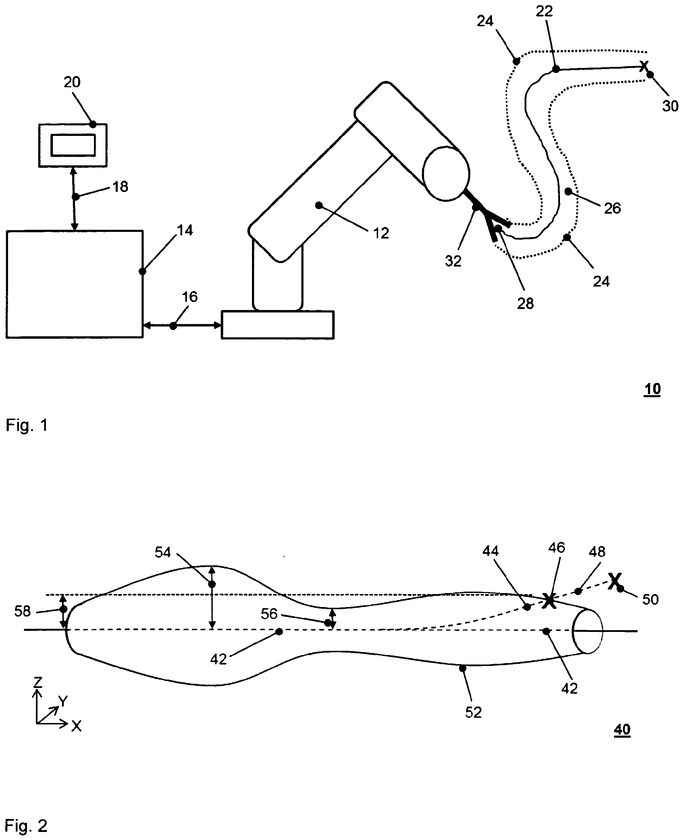

Fig. 1 shows an exemplary system with robot and robot controller in a schematic sketch 10. A robot 12 is connected by a bidirectional link connection 16 with a robot controller 14. The robot controller 14 is connected by a bidirectional link 18 with an input device 20, in this case a teach pendant. The robot controller 14 comprises a computing device which is able to execute a robot program stored thereon to and control the movement of the robot 12 accordingly.

A robot tool 32 is foreseen at the tip of the arm of the robot 12 which comprises several degrees of freedom in movement, in this case six. A robot program stored within the robot controller 14 defines a movement path 24 along that the robot tool 32 respectively a belonging TCP is foreseen to be moved. A movement path normally is defined by certain coordinates and belonging orientations, wherein the path might be a linear connection inbetween those coordinates.

The robot 12 comprises several degrees of freedom in movement so that it is able to guide the robot tool 32 respectively a belonging TCP in a desired orientation along the movement path 22, which starts at the point 28 and ends at the point 30. A tolerance zone 26 is foreseen along and around the movement path 22. In the case, that the movement of the TCP of the robot 12 exceeds the limits 24 of the tolerance zone 26, a stop of the robot is initiated by the robot controller 14.

Figure 2 shows in a sketch 40 a second given movement path 42 with tolerance zone 52 around wherein there is a narrowed section 54 and a widened section 56 compared to the average width 58 of the tolerance zone. A narrowed section 54 might be useful in case of an increased movement speed of the robot since a possible deviation is detected earlier then. A deviating real movement path is marked with the dotted line 44. At an intersection point 46 the deviating real movement path is leaving the tolerance zone 52 around the given movement path 42 and a stopping of the robot is initiated. A retard section 48 respectively a follow-on distance is marked with a dotted line. This distance is required by the robot to come to a complete stop 50.

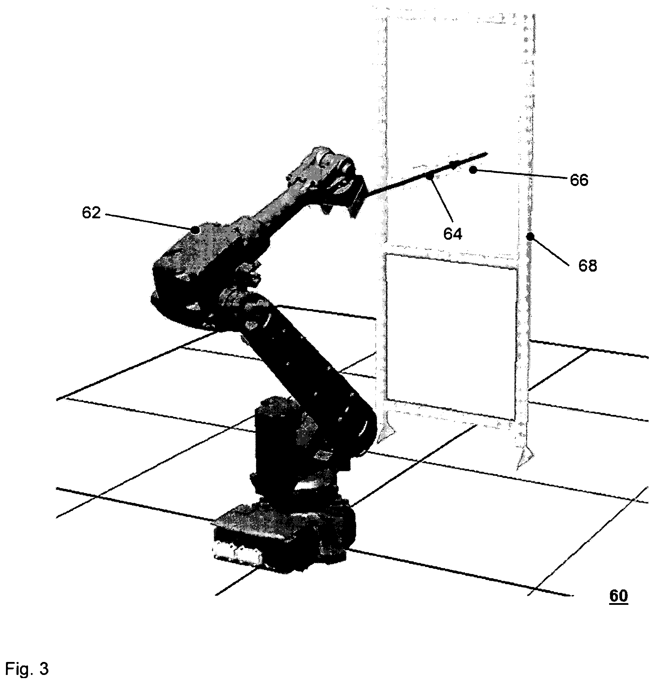

Figure 3 shows an exemplary second robot 62 in a working environment. The intended given movement path of the robot is marked with the reference number 64, wherein it is surrounded by a cylindrical shaped tolerance zone 66. The working environment also comprises a cooperation window 68. Behind this window a cuboid-like safety area is foreseen, where a person might cooperate with the robot 64 and where the robot 64 is not allowed to move in.

### List of reference signs

- 10: exemplary system with robot and robot controller
- 12: exemplary first robot
- 14: exemplary robot controller
- 16: first link connection
- 18: second link connection
- 20: input device
- 22: first given movement path
- 24: limit of tolerance zone
- 26: tolerance zone of first given movement path
- 28: start point of given first movement path
- 30: end point of given first movement path
- 32: robot tool
- 40: second given movement path with tolerance zone
- 42: second given movement path
- 44: deviating real movement path
- 46: intersection point
- 48: retard section
- 50: stop point
- 52: limit of tolerance zone of second given movement path
- 54: widened section of tolerance zone
- 56: narrowed section of tolerance zone
- 58: average width of tolerance zone
- 60: exemplary second robot in working environment
- 62: exemplary second robot
- 64: third given movement path
- 66: tolerance zone of third given movement path
- 68: cooperation window

## Claims

1. Method for supervising a robot (12, 62), said robot having a robot arm and a tool center point (TCP), whereby it is possible to move the TCP to each point within a predefined working range of the robot, whereby it is forbidden for the TCP to enter a safety zone within the working range of the robot, said robot having a robot controller (14) which is foreseen to control a movement of the robot (12, 62) according to data of a predefined movement program, comprising the following steps:
• providing a movement program defining at least a given movement path (22, 42, 64) for the tool center point (TCP) of the robot (12, 62),
• moving the robot (12, 62) with its TCP running along the movement path (22, 42, 64) according to the movement program,
• continuously determining the actual position of the TCP,
• defining a tolerance zone (24, 52, 66) with limits (24) along and around the movement path (22, 42, 64), whereby the tolerance zone is outside the said safety zone, and whereby the tolerance zone (24, 52, 66) is extending in a hose-like manner along the movement path (22, 42, 64),
the method being **characterized in that**:
the tolerance zone (24, 52, 66) is widened (54) and/or narrowed (56) at least in sections along the movement path (22, 42, 64) compared to the average width (58) of the tolerance zone (24, 52, 66), and wherein the width of the tolerance zone (24, 52, 66) is anti-proportional to a desired movement speed within certain limits,
• continuously verifying whether the actual TCP position is within the tolerance zone (24, 52, 66),
• stopping of the robot movement in the case that the movement of the TCP of the robot exceeds the limits (24) of the tolerance zone (26).

2. Method according to claim 1, **characterized in that** the tolerance zone (24, 52, 66) is extending at least in sections approximately circular around the movement path (22, 42, 64).

3. Method according to any of the previous claims, **characterized in that** the determining of the actual position of the TCP is being done based on the actual measured axial values of the robot (12, 62).

4. Method according to any of the claims 1 to 3, **characterized in that** the determining of the actual position of the TCP is being done based on a distance measurement between the moveable TCP or a point with fixed relation thereto and a fixed point within a working space around the robot (12, 62).

5. Method according to any of the previous claims, **characterized in that** the safety zone is foreseen with a surrounding buffer zone, whereas a stopping of the robot movement is initiated in the case that the actual TCP is inside the buffer zone.

6. Method according to any of the previous claims, **characterized by** the following additional steps:
• continuously determining the real orientation of the TCP
• continuously determining the desired orientation of the TCP
• stopping of the robot movement in the case that the difference between real and desired orientation of TCP exceeds a given limit at the same time

7. Method according to any of the previous claims, **characterized by** the following additional steps:
• continuously determining the real movement speed of the TCP
• continuously determining the desired movement speed of the TCP
• stopping of the robot movement in the case that the difference between real and desired movement speed of TCP exceeds a given limit at the same time

## Patentansprüche

1. Verfahren zum Überwachen eines Roboters (12, 62), wobei der Roboter einen Roboterarm und einen Werkzeugmittelpunkt (TCP) aufweist, wobei es möglich ist, den TCP zu jedem Punkt innerhalb eines vordefinierten Arbeitsbereichs des Roboters zu bewegen, wobei es für den TCP verboten ist, in eine Sicherheitszone innerhalb des Arbeitsbereichs des Roboters einzutreten, wobei der Roboter eine Robotersteuerung (14) aufweist, die vorgesehen ist, eine Bewegung des Roboters (12, 62) gemäß Daten eines vordefinierten Bewegungsprogramms zu steuern, umfassend die folgenden Schritte:
• Bereitstellen eines Bewegungsprogramms, das mindestens eine gegebene Bewegungsbahn (22, 42, 64) für den Werkzeugmittelpunkt (TCP) des Roboters (12, 62) definiert,
• Bewegen des Roboters (12, 62) mit seinem TCP, der entlang der Bewegungsbahn (22, 42, 64) läuft, gemäß dem Bewegungsprogramm,
• kontinuierliche Bestimmung der tatsächlichen Position des TCP,
• Definition einer Toleranzzone (24, 52, 66) mit Grenzen (24) entlang und um die Bewegungsbahn (22, 42, 64) herum,
• wobei die Toleranzzone außerhalb der genannten Sicherheitszone liegt, und wobei sich die Toleranzzone (24, 52, 66) schlauchartig entlang der Bewegungsbahn (22, 42, 64) erstreckt,
wobei das Verfahren **dadurch gekennzeichnet ist, dass**:
• die Toleranzzone (24, 52, 66) zumindest abschnittsweise entlang der Bewegungsbahn (22, 42, 64) im Vergleich zur durchschnittlichen Breite (58) der Toleranzzone (24, 52, 66) verbreitert (54) und/oder verengt (56) ist, und wobei die Breite der Toleranzzone (24, 52, 66) innerhalb bestimmter Grenzen antiproportional zu einer gewünschten Bewegungsgeschwindigkeit ist,
• kontinuierliche Überprüfung, ob die tatsächliche TCP-Position innerhalb der Toleranzzone liegt (24, 52, 66),
• Anhalten der Roboterbewegung für den Fall, dass die Bewegung des TCP des Roboters die Grenzen (24) der Toleranzzone (26) überschreitet.

2. Verfahren gemäß Anspruch 1, **dadurch gekennzeichnet, dass** sich die Toleranzzone (24, 52, 66) zumindest abschnittsweise annähernd kreisförmig um die Bewegungsbahn (22, 42, 64) erstreckt.

3. Verfahren gemäß einem der vorhergehenden Ansprüche, **dadurch gekennzeichnet, dass** die Bestimmung der tatsächlichen Position des TCP auf der Grundlage der tatsächlich gemessenen axialen Werte des Roboters (12, 62) erfolgt.

4. Verfahren gemäß einem der Ansprüche 1 bis 3, **dadurch gekennzeichnet, dass** die Bestimmung der tatsächlichen Position des TCP auf der Grundlage einer Abstandsmessung zwischen dem beweglichen TCP oder einem Punkt mit fester Beziehung dazu und einem festen Punkt in einem Arbeitsraum um den Roboter (12, 62) herum erfolgt.

5. Verfahren nach einem der vorhergehenden Ansprüche, **dadurch gekennzeichnet, dass** die Sicherheitszone mit einer umgebenden Pufferzone vorgesehen ist, wobei ein Stoppen der Roboterbewegung für den Fall eingeleitet wird, dass sich der tatsächliche TCP innerhalb der Pufferzone befindet.

6. Verfahren nach einem der vorhergehenden Ansprüche, **gekennzeichnet durch** die folgenden zusätzlichen Schritte:
- kontinuierliche Bestimmung der tatsächlichen Ausrichtung des TCP
- kontinuierliche Bestimmung der gewünschten Ausrichtung des TCP
- Anhalten der Roboterbewegung für den Fall, dass der Unterschied zwischen der tatsächlichen und der gewünschten Ausrichtung des TCP gleichzeitig einen vorgegebenen Grenzwert überschreitet.

7. Verfahren nach einem der vorhergehenden Ansprüche, **gekennzeichnet durch** die folgenden zusätzlichen Schritte:
- kontinuierliche Bestimmung der tatsächlichen Bewegungsgeschwindigkeit des TCP
- kontinuierliche Bestimmung der gewünschten Bewegungsgeschwindigkeit des TCP
- Anhalten der Roboterbewegung für den Fall, dass die Differenz zwischen der tatsächlichen und der gewünschten Bewegungsgeschwindigkeit des TCP gleichzeitig einen vorgegebenen Grenzwert überschreitet.

## Revendications

1. Procédé pour surveiller un robot (12, 62), ledit robot ayant un bras de robot et un point d'effecteur (TCP), moyennant quoi il est possible de mouvoir le TCP jusqu'à chaque point au sein d'une sphère de travail prédéfinie du robot, moyennant quoi il est interdit pour le TCP d'entrer dans une zone de sécurité au sein de la sphère de travail du robot, ledit robot ayant une unité de commande de robot (14) qui est prévue pour commander un mouvement du robot (12, 62) selon des données d'un programme de mouvement préfini, comprenant les étapes suivantes :
• la fourniture d'un programme de mouvement définissant au moins un chemin de mouvement donné (22, 42, 64) pour le point d'effecteur (TCP) du robot (12, 62),
• le mouvement du robot (12, 62), son TCP se déplaçant le long du chemin de mouvement (22, 42, 64) selon le programme de mouvement,
• la détermination continue de la position réelle du TCP,
• la définition d'une zone de tolérance (24, 52, 66) avec des limites (24) le long et autour du chemin de mouvement (22, 42, 64), moyennant quoi la zone de tolérance est à l'extérieur de ladite zone de sécurité, et moyennant quoi la zone de tolérance (24, 52, 66) s'étend de manière similaire à un tuyau flexible le long du chemin de mouvement (22, 42, 64),
le procédé étant **caractérisé en ce que** :
la zone de tolérance (24, 52, 66) est élargie (54) et/ou amincie (56) au moins dans des sections le long du chemin de mouvement (22, 42, 64) par rapport à la largeur moyenne (58) de la zone de tolérance (24, 52, 66), et dans lequel la largeur de la zone de tolérance (24, 52, 66) est anti-proportionnelle à une vitesse de mouvement souhaitée au sein de certain limites,
• la vérification continue du fait que la position de TCP réelle est ou non au sein de la zone de tolérance (24, 52, 66),
• l'arrêt du mouvement de robot au cas où le mouvement du TCP du robot dépasse les limites (24) de la zone de tolérance (26).

2. Procédé selon la revendication 1, **caractérisé en ce que** la zone de tolérance (24, 52, 66) s'étend au moins dans des sections approximativement circulaires autour du chemin de mouvement (22, 42, 64).

3. Procédé selon l'une quelconque des revendications précédentes, **caractérisé en ce que** la détermination de la position réelle du TCP est réalisée sur la base des valeurs axiales mesurées réelles du robot (12, 62).

4. Procédé selon l'une quelconque des revendications 1 à 3, **caractérisé en ce que** la détermination de la position réelle du TCP est réalisée sur la base d'une mesure de distance entre le TCP mobile ou un point avec une relation fixe par rapport à celui-ci et un point fixe au sein d'un espace de travail autour du robot (12, 62).

5. Procédé selon l'une quelconque des revendications précédentes, **caractérisé en ce que** la zone de sécurité est prévue avec une zone tampon environnante, alors qu'un arrêt du mouvement de robot est initialisé au cas où le TCP réel est à l'intérieur de la zone tampon.

6. Procédé selon l'une quelconque des revendications précédentes, **caractérisé par** les étapes supplémentaires suivantes :
• la détermination continue de l'orientation vraie du TCP,
• la détermination continue de l'orientation souhaitée du TCP,
• l'arrêt du mouvement de robot au cas où la différence entre les orientations vraie et souhaitée de TCP dépasse une limite donnée en même temps.

7. Procédé selon l'une quelconque des revendications précédentes, **caractérisé par** les étapes supplémentaires suivantes :
• la détermination continue de la vitesse de mouvement vraie du TCP,
• la détermination continue de la vitesse de mouvement souhaitée du TCP,
• l'arrêt du mouvement de robot au cas où la différence entre les vitesses de mouvement vraie et souhaitée de TCP dépasse une limite donnée en même temps.
